# EUROPÄISCHE PATENTANMELDUNG

(11) **EP 1 057 681 A1**
(43) Veröffentlichungstag der Anmeldung: **06.12.2000**
(21) Anmeldenummer: 00109478.8
(22) Anmeldetag: 04.05.2000
(51) Int. Cl.: B60K 31/04

(54) **Verfahren und Vorrichtung zur Einstellung eines Automatikgetriebes in einem Fahrzeuggeschwindigkeitsbegrenzungssystem**

(30) Priorität: 31.05.1999 DE 19924858
(71) Anmelder: DaimlerChrysler AG, 70567 Stuttgart (DE)
(72) Erfinder: Linden, Thomas, 70327 Stuttgart (DE)

(57) **Zusammenfassung**

Bei einem Verfahren zur Einstellung eines Automatikgetriebes in einem Fahrzeug mit Geschwindigkeits-Begrenzersystem werden unter Berücksichtigung von Fahrzeug-Zustandsgrößen und Fahrzeug-Betriebsgrößen Stellsignale zur Einlegung einer bestimmten Getriebe-Gangstufe zur Einhaltung einer im Begrenzersystem eingestellten Höchstgeschwindigkeit erzeugt.

Um Komfort und Fahrsicherheit bei Fahrzeugen mit Automatikgetrieben, die mit einem Geschwindigkeits-Begrenzersystem ausgestattet sind, zu verbessern, wird bei aktivierter Geschwindigkeitsbegrenzung auf die Höchstgeschwindigkeit für einen definierten Geschwindigkeitsbereich bis zur Höchstgeschwindigkeit eine untere Gangbegrenzung mit einer Mindest-Gangstufe im Getriebe vorgegeben. Weiterhin wird die Mindest-Gangstufe in Abhängigkeit der aktuellen Fahrzeuggeschwindigkeit aus einer oberen Gangbegrenzung mit einer Höchst-Gangstufe berechnet und wird die Höchst-Gangstufe in Abhängigkeit der vorgegebenen Höchstgeschwindigkeit auf einen definierten Wert gesetzt.

## Beschreibung

Die Erfindung betrifft ein Verfahren und eine Vorrichtung zur Einstellung eines Automatikgetriebes in einem Fahrzeug mit Geschwindigkeits-Begrenzersystem nach dem Oberbegriff des Anspruches 1 bzw. 13.

Es sind Geschwindigkeits-Regelsysteme bekannt, mit denen eine vom Fahrer vorgegebene oder über ein automatisches Ermittlungssystem errechnete Zielgeschwindigkeit in einem Kraftfahrzeug selbsttätig eingehalten werden kann. Diese Geschwindigkeits-Regelsysteme umfassen sowohl Tempomat-Funktionen, bei denen das Fahrzeug eine vom Fahrer gewählte Mindestgeschwindigkeit einhalten soll, als auch Begrenzer-Funktionen, bei denen das Fahrzeug eine vorn Fahrer vorgegebene oder eine beispielsweise in Abstands-Regelungssystemen automatisch ermittelte Höchstgeschwindigkeit nicht überschreiten darf. Bei den Begrenzer-Funktionen werden in dem Geschwindigkeits-Regelsystem ausgehend von der Höchstgeschwindigkeit und den aktuellen Fahrzeugzustandsgrößen, insbesondere der aktuellen Fahrzeuggeschwindigkeit, Stellsignale erzeugt, mittels denen der Motor, das Getriebe oder die Radbremsen zur Einhaltung der Höchstgeschwindigkeit eingestellt werden.

Aus der Druckschrift DE 44 07 082 A1 ist es bekannt, zur Steuerung von Automatikgetrieben in Kraftfahrzeugen ein Getriebe-Stellsignal zu erzeugen, um das Fahrzeug aus der momentanen Geschwindigkeit auf eine gewünschte Höchstgeschwindigkeit abzubremsen, die beispielsweise dem Abstand zu einem vorausfahrenden Fahrzeug entsprechend ermittelt wird. Hierzu wird ein Gangwechsel in einen kleineren Gang erzwungen, wodurch ein höheres Übersetzungsverhältnis mit einem größeren Verzögerungsmaß erreicht wird. Der Fahrer hat bei diesem System die Möglichkeit, über die Betätigung des Beschleunigungspedals die automatische Abstands- bzw. Geschwindigkeitsregelung außer Kraft zu setzen und den Abstand zum vorausfahrenden Fahrzeug nach eigenem Wunsch einzustellen.

Aus der Druckschrift DE 195 09 492 A1 ist ein Geschwindigkeits-Regelsystem mit Begrenzerfunktion bekannt, bei dem der Fahrer eine maximal zulässige Höchstgeschwindigkeit vorgeben kann. Das Regelsystem begrenzt die Fahrzeuggeschwindigkeit selbsttätig auf die Höchstgeschwindigkeit, wenn die Betätigung des Gaspedals durch den Fahrer eine höhere Fahrzeuggeschwindigkeit als die eingestellte Höchstgeschwindigkeit ergeben würde. In diesem Fall wird unabhängig von der tatsächlichen Gaspedalstellung ein der vorgegebenen Höchstgeschwindigkeit entsprechendes Stellsignal erzeugt, das zur Einstellung des Motors und des Getriebes herangezogen wird.

Beim Regelsystem der DE 195 09 492 A1 wird ein Hochschalten des Getriebes kurz vor Erreichen der Höchstgeschwindigkeit unterdrückt, wodurch verhindert wird, daß das Fahrzeug durch den Momentensprung des Schaltvorgangs über die Höchstgeschwindigkeit hinaus schiebt.

Falls der Fahrer sich mit geringer Beschleunigung der zulässigen Höchstgeschwindigkeit nähert oder mit konstanter Geschwindigkeit unterhalb der Höchstgeschwindigkeit fährt, so wird zur Drehzahlreduzierung im Getriebe die größtmögliche Gangstufe eingelegt. Wird nun das Fahrzeug plötzlich stark beschleunigt, überschreitet die tatsächliche Gaspedalstellung die vom Begrenzersystem vorgegebene Ersatzgröße, die nunmehr zur Momenteneinstellung herangezogen wird. Das Getriebe schaltet zurück, wobei im Schaltzeitpunkt aufgrund des geöffneten Wandlers im Automatikgetriebe Eingriffe des Begrenzers in das Motormoment ohne Rückwirkungen auf das Antriebsmoment bleiben. Dies führt zu einem schlechten Einschwingverhalten bei Annäherung an die Höchstgeschwindigkeit und zu Ruckschaltungen, die den Fahrer irritieren können.

Darüberhinaus ist es aus der DE 195 09 492 A1 bekannt, bei kleinen eingestellten Höchstgeschwindigkeiten die Rückschaltung der Getriebegangstufe auf den zweiten Gang zu begrenzen, da bei vollem Motormoment im ersten Gang die Fahrzeugbeschleunigung bis zum Erreichen der Höchstgeschwindigkeit nicht mehr abgebaut werden kann und ein Überschwingen über die Höchstgeschwindigkeit zu befürchten ist. Die Vorgabe des zweiten Gangs als Mindest-Gangstufe stellt eine feste untere Begrenzung dar, die auf niedrige Höchstgeschwindigkeiten beschränkt und nicht auf höhere Geschwindigkeitsbereiche übertragbar ist. Eine feste Vorgabe in höheren Geschwindigkeitsbereichen führt zu Einbußen bei Komfort und Beschleunigung, ohne mit hinreichender Sicherheit ein Überschwingen verhindern zu können, weil Schaltvorgänge in unmittelbarer Nähe der Höchstgeschwindigkeit nicht vermieden werden können.

Ergänzend wird auf die Druckschrift DE 44 34 022 A1 verwiesen, aus der ebenfalls Getriebeschaltungseingriffe zur Regelung der Fahrzeuggeschwindigkeit bekannt sind.

Der Erfindung liegt das Problem zugrunde, Komfort und Fahrsicherheit bei Fahrzeugen mit Automatikgetrieben, die mit einem Geschwindigkeits-Begrenzersystem ausgestattet sind, zu verbessern. Es soll insbesondere das Einschwingverhalten bei Annäherung an die Höchstgeschwindigkeit verbessert werden.

Dieses Problem wird erfindungsgemäß mit den Merkmalen des Anspruches 1 bzw. 13 gelöst.

Gemäß der Neuerung wird für den Geschwindigkeitsbereich unterhalb der Höchstgeschwindigkeit ein Gangfenster mit einer unteren Gangbegrenzung vorgegeben, wobei die Mindest-Gangstufe der unteren Gangbegrenzung aus einer Obergrenze in Abhängigkeit der aktuellen Fahrzeuggeschwindigkeit und die Obergrenze in Abhängigkeit der vorgegebenen Höchstgeschwindigkeit ermittelt wird. Man erhält hierdurch eine Gangbegrenzung nach unten für die Annäherung an die Höchstgeschwindigkeit, wodurch weniger Schaltwechsel entstehen, so daß ein gleichmäßiges und im wesentlichen ruckfreies Einschwingen des Triebstranges erreicht wird. Momentenunterbrechungen als Folge von Schaltvorgängen werden weitgehend vermieden oder zumindest reduziert, außerdem bewegt sich das Fahrzeug aufgrund der unteren Gangbegrenzung bei Annäherung an die Höchstgeschwindigkeit im Bereich verhältnismäßig kleinen Motormoments, wodurch das Schwingungsverhalten ebenfalls verbessert wird. Die untere Gangbegrenzung kann adaptiv an alle vorgegebenen Geschwindigkeitsniveaus der einzustellenden Höchstgeschwindigkeit angepaßt werden .

Die Gangbegrenzung kann zweckmäßig auch bei Beibehaltung der Geschwindigkeitsbegrenzung außer Kraft gesetzt werden, sofern das erzeugte Motormoment aufgrund ungünstiger Lastbedingungen, beispielsweise an großen Steigungen, eine ausreichend hohe Fahrzeugbeschleunigung bis zum Erreichen der erlaubten Höchstgeschwindigkeit nicht mehr zuläßt. Zur Deaktivierung der Gangbegrenzung wird überprüft, ob die tatsächliche Fahrzeuggeschwindigkeit unterhalb der Höchstgeschwindigkeit liegt, ob die vom Fahrer erzeugte Ist-Gaspedalstellung eine korrespondierende Ersatzgröße des Begrenzers, welche der Höchstgeschwindigkeit zugeordnet ist, übersteigt, und ob die Fahrzeugbeschleunigung kleiner ist als ein applizierbarer Beschleunigungs-Grenzwert. Falls diese Bedingungen vorliegen, kann mit der bestehenden Mindest-Gangstufe keine akzeptable Annäherung an die Höchstgeschwindigkeit erreicht werden, in diesem Fall ist eine Rückschaltung des Getriebes angezeigt.

Weitere Vorteile und zweckmäßige Ausführungsformen sind den weiteren Ansprüchen, der Figurenbeschreibung und den Zeichnungen zu entnehmen. Es zeigen:
- Fig. 1: ein Ablaufdiagramm mit den grundlegenden Verfahrensschritten für eine Steuerung eines Automatikgetriebes zur Begrenzung der Fahrzeuggeschwindigkeit,
- Fig. 2: ein Schaubild mit dem Verlauf der Gang-Obergrenze als obere Grenze der unteren Gangbegrenzung in Abhängigkeit der zulässigen Höchstgeschwindigkeit,
- Fig. 3: ein Schaubild dem Verlauf der unteren Gangbegrenzung in Abhängigkeit der Fahrzeug-Istgeschwindigkeit,
- Fig. 4: ein Schaubild mit dem zeitabhängigen Geschwindigkeitsverlauf und der zulässigen Höchstgeschwindigkeit,
- Fig. 5: ein Schaubild mit dem zeitabhängigen Verlauf der tatsächlichen Gangstufe, der Gang-Obergrenze und der unteren Gangbegrenzung.

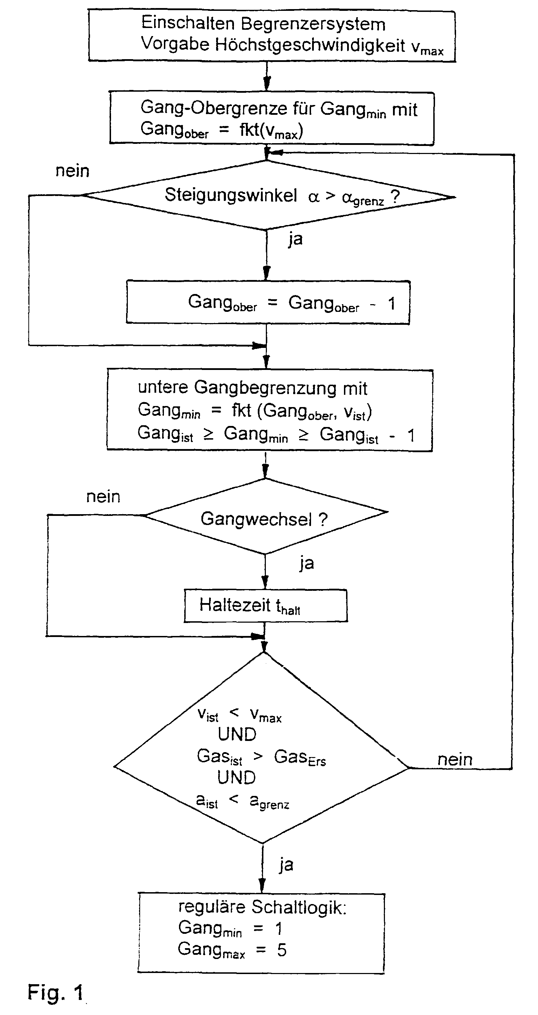

Das in Fig. 1 dargestellte Ablaufschema ist in einem Begrenzersystem eines Kraftfahrzeugs als Teil einer übergeordneten Regeleinheit realisiert. Das Geschwindigkeits-Begrenzersystem wird zur Begrenzung der Fahrzeuggeschwindigkeit auf eine vorgebbare Höchstgeschwindigkeit vₘₐₓ eingestellt, welche entweder unmittelbar vom Fahrer vorgegeben oder von einem Fahrzeugsystem unter Berücksichtigung äußerer Bedingungen und Einflüsse wie Geschwindigkeitsbeschränkungen, Sichtverhältnisse, Verkehrsdichte etc. automatisch ermittelt wird. Das Begrenzersystem kann das auf die Straße übertragbare Antriebsmoment sowohl über das Motormoment der Brennkraftmaschine als auch über das Automatikgetriebe zur Einhaltung der Höchstgeschwindigkeit beeinflussen. Im folgenden wird eine vorteilhafte Manipulation der Gangstufen im Automatikgetriebe beschrieben.

Gemäß dem Ablaufschema nach Fig. 1 wird in einem Verfahrensschritt 1 zunächst das Geschwindigkeits-Begrenzersystem unter Vorgabe einer Höchstgeschwindigkeit vₘₐₓ eingeschaltet. Die folgenden Verfahrensschritte 2 bis 5 repräsentieren die Ermittlung unterer Gangbegrenzung, oberhalb der zwar Schaltungen erlaubt sind, das jedoch den zulässigen Schaltbereich nach unten stark einschränkt, uni häufige Schaltwechsel zu vermeiden.

Der Höchstgeschwindigkeit vₘₐₓ wird gemäß einer hinterlegten Kennlinie im Verfahrensschritt 2 eine Gang-Obergrenze Gang_{ober} zugeordnet, welche als Funktion der Höchstgeschwindigkeit vₘₐₓ darstellbar ist und unter Normalbedingungen bei Einhaltung der Höchstgeschwindigkeit vₘₐₓ bei eingeschaltetem Begrenzersystem beibehalten wird. Die Gang-Obergrenze Gang_{ober} stellt die Obergrenze dar, die der Wert der unteren Gangbegrenzung Gangₘᵢₙ maximal einnehmen kann. Die zulässige Höchstgeschwindigkeit vₘₐₓ wird auch für den Fall eingehalten, daß die vom Fahrer erzeugte tatsächliche Gaspedalstellung einen korrespondierenden, vom Begrenzer erzeugten und der Höchstgeschwindigkeit entsprechenden Gaspedal-Ersatzwert übersteigt; in diesem Fall wird der Gaspedal-Ersatzwert der Einstellung von Motor und Getriebe zugrunde gelegt.

In einem folgenden Verfahrensschritt 3 wird überprüft, ob Bedingungen vorliegen, die eine Herabsetzung der Gang-Obergrenze Gang_{ober} rechtfertigen. Gemäß dem Verfahrensschritt 3 wird eine Abfrage durchgeführt, ob das Fahrzeug sich auf einer ansteigenden Strecke mit einem Steigungswinkel α befindet, welcher über einem vorgebbaren Grenzwert α_{grenz} liegt. In diesem Fall ("Ja"-Verzweigung) ist eine Reduzierung der Obergrenze wie in Verfahrensschritt 4 dargestellt um den Wert 1 erforderlich, damit das Fahrzeug in die Lage versetzt wird, im Bereich höherer Motordrehzahlen mit höherem Motormoment zu fahren, um die zulässige Höchstgeschwindigkeit vₘₐₓ erreichen zu können. Sofern sich das Fahrzeug nicht auf einer Steigung befindet bzw. der Steigungswinkel unterhalb des Grenzwertes α_{grenz} liegt, wird der Nein-Verzweigung entsprechend der Verfahrensschritt 4 übersprungen.

Im Verfahrensschritt 5 wird eine untere Gangbegrenzung mit Mindest-Gangstufe Gangₘᵢₙ vorgegeben, welche als Funktion der Obergrenze Gang_{ober} in Abhängigkeit der tatsächlichen Fahrzeuggeschwindigkeit vᵢₛₜ darstellbar ist. Die Mindest-Gangstufe Gangₘᵢₙ muß zudem zusätzliche Randbedingungen erfüllen: die Mindest-Gangstufe Gangₘᵢₙ darf die aktuelle Getriebe-Gangstufe Gangᵢₛₜ nicht überschreiten und darf außerdem nur maximal eine Stufe unter der aktuellen Getriebe-Gangstufe Gangᵢₛₜ liegen. Die Begrenzung der Mindest-Gangstufe auf einen Wert, welcher nicht kleiner sein darf als die aktuelle Getriebe-Gangstufe abzüglich einer Gangstufe, soll Doppelrückschaltungen des Getriebes ausschließen.

Im folgenden Verfahrensschritt 6 wird überprüft, ob im Automatikgetriebe ein Gangwechsel durchgeführt wurde. Sofern dies der Fall ist ("Ja"-Verzweigung), wird gemäß Verfahrensschritt 7 der Schaltprozeß im Getriebe für eine Haltezeit tₕₐₗₜ gehemmt, um zu vermeiden, daß in kurzer Zeit eine Mehrzahl aufeinanderfolgender Schaltungen durchgeführt wird. Sofern kein Gangwechsel stattgefunden hat ("Nein"-Verzweigung), wird die Unterbrechung des Schaltprozesses gemäß Verfahrensschritt 7 umgangen und unmittelbar zum Verfahrensschritt 8 fortgefahren.

Verfahrensschritt 8 stellt eine Deaktivierungsbedingung für die Abschaltung der Gangbegrenzung dar. Sofern die Deaktivierungsbedingung erfüllt ist, wird zumindest die untere Gangbegrenzung abgeschaltet, auch wenn das Begrenzersystem zur Einhaltung der Höchstgeschwindigkeit vₘₐₓ eingeschaltet bleibt. Die Deaktivierungsbedingung umfaßt zweckmäßig eine Mehrzahl von Einzelbedingungen. Gemäß Verfahrensschritt 8 wird überprüft, ob eine Fahreranforderung gemäß einer tatsächlichen Gaspedalstellung Gasᵢₛₜ vorliegt, welche die vom Begrenzersystem erzeugte und mit der zulässigen Höchstgeschwindigkeit vₘₐₓ korrespondierende Gaspedal-Ersatzgröße Gas_{Ers} übersteigt. Zudem wird überprüft, ob die tatsächliche Fahrzeugbeschleunigung aᵢₛₜ unterhalb eines applizierbaren Beschleunigungsgrenzwertes a_{grenz} liegt. Über die Beschleunigungsabfrage sollen extreme Verhältnisse berücksichtigt werden, beispielsweise Fahrten mit vollbeladenem Fahrzeug, Fahrten in großer Höhe oder Fahrten an großen Steigungen. Schließlich wird auch noch berücksichtigt, ob die tatsächliche Fahrzeuggeschwindigkeit vᵢₛₜ kleiner ist als die zulässige Höchstgeschwindigkeit vₘₐₓ bzw. ob die tatsächliche Fahrzeuggeschwindigkeit vᵢₛₜ sich in einem ausreichenden Abstand zur zulässigen Höchstgeschwindigkeit vₘₐₓ befindet, da im Falle eines zu geringen Geschwindigkeitsabstandes eine Beschleunigung bis zum Erreichen der Höchstgeschwindigkeit mit einem Schaltwechsel verbunden wäre, der durch den geringen Geschwindigkeitszuwachs nicht gerechtfertigt wäre.

Für den Fall, daß die Deaktivierungsbedingungen erfüllt sind ("Ja"-Verzweigung) wird zum Verfahrensschritt 9 fortgefahren, gemäß dem die reguläre Schaltlogik des Getriebes mit maximalem Gangfenster aktiviert wird, welches sich durch eine kleinstmögliche Mindest-Gangstufe und eine größtmögliche Höchst-Gangstufe Gangₘₐₓ auszeichnet. Für den Fall, daß die Deaktivierungsbedingungen nicht erfüllt sind ("Nein"-Verzweigung), wird unter Beibehaltung des Gangfensters zum Verfahrensschritt 3 zurückgekehrt und es werden nachfolgend die Verfahrensschritte 3 bis 7 zyklisch durchlaufen, um gegebenenfalls bei einer Änderung äußerer Bedingungen und Zustandsgrößen, beispielsweise geändertem Steigungswinkel α oder geänderter Fahrzeuggeschwindigkeit vᵢₛₜ, eine Anpassung der unteren Gangbegrenzung mit Mindest-Gangstufe Gangₘᵢₙ vorzunehmen.

Eine Aufhebung der aufgezeigten unteren Gangbegrenzung kann auch für den Fall vorgenommen werden, daß Rückschaltungen vom Fahrer initiiert werden. Derartige Rückschaltungen werden auch dann übernommen, wenn manuell eine kleinere Schaltstufe ausgewählt wird als von der unteren Gangbegrenzung gemäß oben aufgezeigtem Schema sich ergeben würde. Anschließende Hochschaltungen des Fahrers werden vor einer Übernahme in die Schaltlogik dahingehend auf Zulässigkeit überprüft, ob eine Verträglichkeit mit der Gang-Obergrenze gegeben ist.

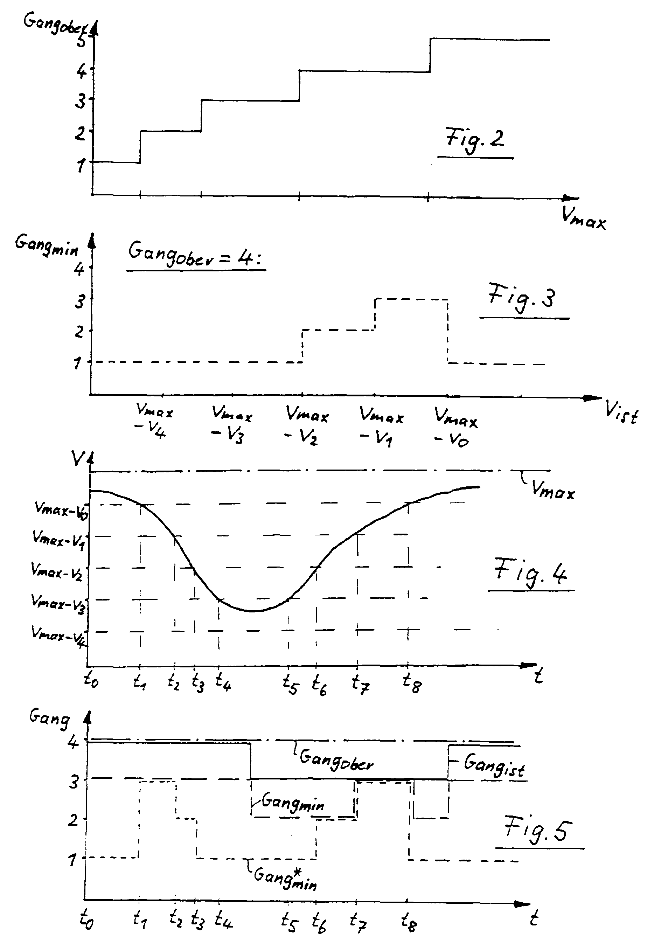

In Fig. 2 ist der Verlauf der Gang-Obergrenze Gang_{ober} in Abhängigkeit der vorgegebenen Höchstgeschwindigkeit vₘₐₓ dargestellt. Der Verlauf ist treppenförmig, mit zunehmender Höchstgeschwindigkeit vₘₐₓ werden auch die Intervalle zwischen Treppensprüngen größer.

Fig. 3 zeigt den Verlauf der Mindest-Gangstufe Gangₘᵢₙ in Abhängigkeit von der tatsächlichen Fahrzeuggeschwindigkeit vᵢₛₜ für eine Gang-Obergrenze Gang_{ober} = 4. Die Mindest-Gangstufe Gangₘᵢₙ hängt sowohl von der aktuellen Geschwindigkeit als auch von der Obergrenze Gang_{ober} und somit indirekt von der zulässigen Höchstgeschwindigkeit vₘₐₓ ab. Die Mindest-Gangstufe Gangₘᵢₙ ist als Treppenfunktion darstellbar, sie wird gemäß nachfolgender Tabelle in Abhängigkeit von Geschwindigkeitsabständen v₀, v₁, v₂, v₃, v₄, welche Abstände zur Höchstgeschwindigkeit vₘₐₓ markieren, berechnet:

| vᵢₛₜ | Mindest-Gangstufe Gangₘᵢₙ |
|---|---|
| vᵢₛₜ > vₘₐₓ - v₀ | 1 |
| vₘₐₓ - v₀ ≥ vᵢₛₜ > vₘₐₓ - v₁ | Gang_{ober} - 1 |
| vₘₐₓ - v₁ ≥ vᵢₛₜ > vₘₐₓ - v₂ | Gang_{ober} - 2 |
| vₘₐₓ - v₂ ≥ vᵢₛₜ > vₘₐₓ - v₃ | Gang_{ober} - 3 |
| vₘₐₓ - v₃ ≥ vᵢₛₜ > vₘₐₓ - v₄ | Gang_{ober} - 4 |
| vᵢₛₜ ≤ vₘₐₓ- v₄ | 1 |

Falls die Fahrzeuggeschwindigkeit vᵢₛₜ in unmittelbarer Nähe der Höchstgeschwindigkeit zwischen vₘₐₓ und vₘₐₓ - v₁ liegt, wird die Mindest-Gangstufe Gangₘᵢₙ auf 1 gesetzt, die untere Gangbegrenzung wird außer Kraft gesetzt. Gleiches gilt, wenn die Fahrzeuggeschwindigkeit vᵢₛₜ sich in einem unteren Geschwindigkeitsbereich befindet, welcher kleiner ist als vₘₐₓ - v₄; auch in diesem Fall wird die Mindest-Gangstufe Gangₘᵢₙ auf den Wert 1 gesetzt. Die Mindest-Gangstufe Gangₘᵢₙ wird auch auf den Wert 1 begrenzt, falls sich gemäß oben dargestelltem Zusammenhang ein rechnerischer Wert kleiner als 1 ergeben würde.

Falls die Obergrenze Gang_{ober} einen anderen Wert einnimmt als im Ausführungsbeispiel gemäß Fig. 3 dargestellt, ergibt sich eine gegenüber Fig. 3 verschobene Funktion für die Mindest-Gangstufe Gangₘᵢₙ. Bei geänderten Obergrenzen Gang_{ober} sind aufgrund der sich unterscheidenden Höchstgeschwindigkeit vₘₐₓ die Geschwindigkeitseckwerte, bei denen ein Gangstufensprung in der Funktion der Mindest-Gangstufe Gangₘᵢₙ erfolgt, gegenüber der Darstellung nach Fig. 3 in der Abszisse verschoben.

Fig. 4 zeigt exemplarisch einen zeitabhängigen Verlauf der Fahrzeuggeschwindigkeit vᵢₛₜ, wobei zum besseren Verständnis Geschwindigkeitseckwerte vₘₐₓ - v₀ bis vₘₐₓ - v₄ eingetragen sind. Fig. 5 zeigt den dazugehörenden zeitlichen Verlauf der tatsächlichen Getriebe-Gangstufe Gangᵢₛₜ sowie der durch die von der Obergrenze Gang_{ober} abhängenden Untergrenze Gangₘᵢₙ.

In Fig. 4 ist die zulässige Höchstgeschwindigkeit vₘₐₓ mit strichpunktierter Linie dargestellt. Der Kurvenverlauf der Fahrzeuggeschwindigkeit vᵢₛₜ beginnt gemäß Fig. 4 zum Zeitpunkt t₀ von einem Niveau knapp unterhalb der zulässigen Höchstgeschwindigkeit vₘₐₓ abzufallen, wobei zu Zeitpunkten t₁, t₂, t₃ und t₄ die Geschwindigkeitseckwerte vₘₐₓ - v₀, vₘₐₓ - v₁, vₘₐₓ - v₂ und vₘₐₓ - v₃ passiert werden. Im weiteren Verlauf steigt die Fahrzeuggeschwindigkeit vᵢₛₜ wieder an, dementsprechend werden zu Zeitpunkten t₅ bis t₈ die Geschwindigkeitseckwerte vₘₐₓ - v₃, vₘₐₓ - v₂, vₘₐₓ - v₁ und vₘₐₓ - v₀ erneut passiert.

Je nach aktuellem Geschwindigkeitsintervall ergibt sich gemäß Fig. 5 bei Anwendung des in Fig. 3 dargestellten Zusammenhangs die kurz-gestrichelt dargestellte vorläufige Mindest-Gangstufe Gangₘᵢₙ*, die zwischen t₀ und t₁ den Wert 1 einnimmt, dann sprunghaft auf den Wert 3 ansteigt, nachfolgend stufenweise bis zum Zeitpunkt t₃ auf den Wert 1 wieder absinkt, bei t₆ und t₇ jeweils um den Wert 1 wieder ansteigt und bei t₈ schließlich um zwei Stufen auf den Wert 1 wieder abfällt. Durch Berücksichtigung der Randbedingung, daß die Mindest-Gangstufe nicht kleiner werden darf als der tatsächliche Gangverlauf Gangᵢₛₜ vermindert um den Wert 1, erhält man aus der vorläufigen Mindest-Gangstufe Gangₘᵢₙ* die lang-gestrichelt dargestellte, endgültige Mindest-Gangstufe Gangₘᵢₙ, die maximal eine Gangstufe unter dem Verlauf der mit durchgezogener Linie dargestellten, tatsächlichen Getriebe-Gangstufe Gangᵢₛₜ liegt. Die tatsächliche Gangstufe Gangᵢₛₜ liegt zu Beginn des Verlaufes bei Gangstufe 4 und wechselt im Zeitintervall zwischen t₄ und t₅ auf die darunterliegende Gangstufe 3, nach dem Zeitpunkt t₈ nimmt die Gangstufe Gangᵢₛₜ wieder den Wert 4 ein. Die endgültige Mindest-Gangstufe Gangₘᵢₙ ist bis zum Zeitpunkt t₇ gegenüber dem tatsächlichen Gangstufenverlauf Gangᵢₛₜ um den Wert 1 nach unten versetzt. Zwischen t₇ und t₈ entspricht der Verlauf der tatsächlichen Gangstufe Gangᵢₛₜ demjenigen der Mindest-Gangstufe Gangₘᵢₙ, nach dem Zeitpunkt t₈ ist die tatsächliche Mindest-Gangstufe Gangₘᵢₙ wieder gegenüber der tatsächlichen Gangstufe nach unten versetzt. Im Zeitintervall zwischen t₇ und t₈ ist der Verlauf von vorläufiger Mindest-Gangstufe Gangₘᵢₙ* und tatsächlicher Mindest-Gangstufe Gangₘᵢₙ identisch, weil in diesem Zeitintervall die zusätzlich zu beachtenden Randbedingungen für die Mindest-Gangstufe nicht greifen, so daß der in Fig. 3 dargestellte Zusammenhang zwischen Mindest-Gangstufe und Fahrzeuggeschwindigkeit maßgebend ist für den Verlauf der tatsächlichen, endgültigen Mindest-Gangstufe Gangₘᵢₙ.

Der Mindest-Gangstufenverlauf Gangₘᵢₙ wird nach oben durch den in Fig. 5 mit strichpunktierter Linie eingetragenen Verlauf der Obergrenze Gang_{ober} begrenzt.

## Patentansprüche

1. Verfahren zur Einstellung eines Automatikgetriebes in einem Fahrzeug mit Geschwindigkeits-Begrenzersystem, bei dem
- zur Einhaltung einer im Begrenzersystem eingestellten Höchstgeschwindigkeit (vₘₐₓ) für einen definierten Geschwindigkeitsbereich bis zur Höchstgeschwindigkeit (vₘₐₓ) eine untere Gangbegrenzung mit einer Mindest-Gangstufe (Gangₘᵢₙ) im Getriebe vorgegeben wird,
- die Mindest-Gangstufe (Gangₘᵢₙ) in Abhängigkeit der aktuellen Fahrzeuggeschwindigkeit (vᵢₛₜ) aus einer Gang-Obergrenze (Gang_{ober}) berechnet wird,
- die Gang-Obergrenze (Gang_{ober}) in Abhängigkeit der vorgegebenen Höchstgeschwindigkeit (vₘₐₓ) auf einen definierten Wert gesetzt wird.

2. Verfahren nach Anspruch 1,
**dadurch gekennzeichnet,**
daß die Mindest-Gangstufe (Gangₘᵢₙ) auf einen unteren Wert begrenzt wird, der höchstens eine Gangstufe kleiner ist als die aktuelle Getriebe-Gangstufe (Gangᵢₛₜ) .

3. Verfahren nach Anspruch 1 oder 2,
**dadurch gekennzeichnet,**
daß die Mindest-Gangstufe (Gangₘᵢₙ) auf einen oberen Wert begrenzt wird, der der Obergrenze (Gang_{ober}) entspricht.

4. Verfahren nach einem der Ansprüche 1 bis 3,
**dadurch gekennzeichnet,**
daß die Obergrenze (Gang_{ober}) auf einen Wert begrenzt wird, der höchstens der aktuellen Getriebe-Gangstufe (Gangᵢₛₜ) entspricht.

5. Verfahren nach einem der Ansprüche 1 bis 4,
**dadurch gekennzeichnet,**
daß nach einem Gangwechsel nach Einhaltung einer Haltezeit ein neuer Wert für eine Mindest-Gangstufe (Gangₘᵢₙ) ermittelt wird.

6. Verfahren nach einem der Ansprüche 1 bis 5,
**dadurch gekennzeichnet,**
daß die Obergrenze (Gang_{ober}) um den Wert eins reduziert wird, sofern das Fahrzeug sich in einer Steigung mit einem einen Grenzwert (α_{grenz}) übersteigenden Steigungswinkel (α) befindet.

7. Verfahren nach einem der Ansprüche 1 bis 6,
**dadurch gekennzeichnet,**
daß die Obergrenze (Gang_{ober}) als Treppenfunktion in Abhängigkeit der vorgegebenen Höchstgeschwindigkeit (vₘₐₓ) darstellbar ist.

8. Verfahren nach einem der Ansprüche 1 bis 7,
**dadurch gekennzeichnet,**
daß die Mindest-Gangstufe (Gangₘᵢₙ) der Obergrenze (Gang_{ober}) abzüglich eines von der aktuellen Fahrzeuggeschwindigkeit (vᵢₛₜ) abhängigen Subtraktionswertes entspricht.

9. Verfahren nach Anspruch 8,
**dadurch gekennzeichnet,**
daß der Subtraktionswert als diskretisierte Funktion des Geschwindigkeitsabstands zwischen aktueller Fahrzeuggeschwindigkeit (vᵢₛₜ) und vorgegebener Höchstgeschwindigkeit (vₘₐₓ) darstellbar ist.

10. Verfahren nach Anspruch 9,
**dadurch gekennzeichnet,**
daß die diskretisierten Geschwindigkeitsabstände der aktuellen Fahrzeuggeschwindigkeit (vᵢₛₜ) von der vorgegebenen Höchstgeschwindigkeit (vₘₐₓ) mit einem Faktor multiplizierbar sind, der als Funktion der vorgegebenen Höchstgeschwindigkeit (vₘₐₓ) darstellbar ist.

11. Verfahren nach einem der Ansprüche 1 bis 10,
**dadurch gekennzeichnet,**
daß die untere Gangbegrenzung deaktiviert wird, falls
- die tatsächliche Fahrzeuggeschwindigkeit (vᵢₛₜ) unterhalb der vorgegebenen Höchstgeschwindigkeit (vₘₐₓ) liegt,
- die Ist-Gaspedalstellung (Gasᵢₛₜ) größer ist als eine mit der vorgegebenen Höchstgeschwindigkeit korrelierende Gaspedal-Ersatzgröße (Gas_{Ers}),
- die Fahrzeugbeschleunigung (aᵢₛₜ) kleiner ist als ein applizierbarer Beschleunigungs-Grenzwert (a_{grenz}).

12. Verfahren nach Anspruch 11,
**dadurch gekennzeichnet,**
daß die untere Gangbegrenzung wieder aktiviert wird, sofern nach der Deaktivierung die tatsächliche Fahrzeuggeschwindigkeit (vᵢₛₜ) innerhalb eines definierten Abstandes zur Höchstgeschwindigkeit (vₘₐₓ) liegt.

13. Vorrichtung zur Einstellung eines Automatikgetriebes in einem Fahrzeug mit Geschwindigkeits-Begrenzersystem, insbesondere Vorrichtung zur Durchführung des Verfahrens nach einem der Ansprüche 1 bis 12, wobei in dem Geschwindigkeits-Begrenzersystem, in welchem die dem vom Fahrer über die Ist-Gaspedalstellung (Gasᵢₛₜ) angeforderten Motormoment entsprechende Geschwindigkeit mit der vorgegebenen Höchstgeschwindigkeit (vₘₐₓ) vergleichbar ist, ein einer Mindest-Gangstufe (Gangₘᵢₙ) entsprechendes Getriebe-Stellsignal zur Einstellung des Automatikgetriebes erzeugbar ist, und wobei die Mindest-Gangstufe (Gangₘᵢₙ) als Funktion der aktuellen Fahrzeuggeschwindigkeit (vᵢₛₜ) aus einer Gang-Obergrenze (Gang_{ober}) berechenbar und die Obergrenze (Gang_{ober}) in Abhängigkeit der vorgegebenen Höchstgeschwindigkeit (vₘₐₓ) auf einen definierten Wert festsetzbar ist.
